# FASCICULE DE BREVET EUROPEEN

(11) **EP 1 281 698 B1**
(45) Date de publication et mention de la délivrance du brevet: **20.04.2005**
(21) Numéro de dépôt: 02291898.1
(22) Date de dépôt: 26.07.2002
(51) Int. Cl.: C04B 41/72

(54) **Composition désactivante de surface de béton ou mortier et son procédé d'application**
Desaktivierungszusammensetzung für Betonoberflächen und Anwendungsverfahren dafür
Deactivating composition for concrete surfaces and method for applying same

(30) Priorité: 01.08.2001 FR 0110310
(43) Date de publication de la demande: 05.02.2003
(73) Titulaire: CIMENTS FRANCAIS, F-92800 Puteaux (FR)
(72) Inventeur: Pasquier, Michel, 78590 Noisy le Roi (FR); Colombet, Pierre, 78980 Longnes (FR); Cassat, Pierre, 28260 Le Mesnil Simon (FR)
(74) Mandataire: Le Cloirec, Claudine

(56) Documents cités:
- DD-A- 230 861
- TAMBURRINO JEFFREY: "High Performance, Cost-Effective Rheology Modifiers for the Coatings Industry" PUBLICATION SUR L'INTERNET, [en ligne] 23 octobre 2000 (2000-10-23), XP002193697 Extrait de l'Internet: <URL:http://www.pcimag.com/CDA/ArticleInfo rmation/features/BNP__Features__Item/0,184 6,13468,00.html> [extrait le 2002-03-20]

## Description

La présente invention concerne une composition désactivante de surface de béton ou mortier, un procédé d'obtention d'un béton ou mortier désactivé à l'aide de cette composition et leurs utilisations.

Les bétons ou mortiers désactivés sont des matériaux dans lesquels le ciment superficiel a été éliminé, laissant apparaître en relief les granulats et permettant ainsi d'obtenir un certain effet esthétique.

En effet, pour les bétons usuels, l'aspect de surface est déterminé par la qualité du moule (surfaces verticales et fond de moule) ou par la qualité de finition des surfaces obtenues par talochage (surfaces horizontales). L'aspect qui en résulte est celui d'un béton lisse, ou presque lisse, et dont la couleur est essentiellement déterminée par celle du ciment et des fines. Pour certaines applications comme la voirie et les éléments de façade, il est intéressant de proposer des bétons qui, tout en conservant leurs performances structurelles, présentent une variété d'aspects élargie.

Dans les industries de la préfabrication et du béton prêt à l'emploi, les méthodes les plus utilisées pour faire apparaître les granulats consistent soit à reprendre la surface du béton (après durcissement et éventuellement démoulage) en utilisant des moyens mécaniques, soit à "désactiver" la surface du béton pendant la période de durcissement en utilisant des retardateurs chimiques.

Les bétons destinés à être désactivés doivent de préférence présenter une répartition granulométrique des granulats particulière dans le but d'assurer la régularité de leur aspect lorsque ceux-ci sont visibles en surface.

Ces précautions prises, la désactivation consiste à répandre sur la surface libre du béton frais ou sur la surface du moule destiné à recevoir le béton frais, un composé ayant un effet retard sur la prise du ciment. Le composé doit être en concentration telle que son effet retard se situe dans les premiers millimètres en profondeur. Ainsi, seule la pâte à proximité de la surface du béton (à savoir la peau du béton) aura une prise différée. Le corps du béton quant à lui fera prise normalement. Lorsque le corps du béton a suffisamment durci, un nettoyage à l'eau de sa surface (éventuellement sous pression) - ou "délavage" - est opéré. N'ayant pas encore fait prise, la pâte est éliminée, et les granulats apparaissent tout en restant solidaires de l'ensemble.

Il est donc nécessaire de formuler des compositions désactivantes équilibrées, c'est-à-dire telles que le principe actif (le retardateur) pénètre la pâte au plus sur une distance égale au tiers du plus grand diamètre des granulats -sinon ils se déchaussent- et provoque cependant, sur cette distance, un retard de prise suffisamment long pour laisser le temps au corps du béton de durcir et permettre ainsi le nettoyage de la surface du béton sans en endommager le corps.

Les compositions déjà mises sur le marché comportent un retardateur de prise, plus souvent associé à un produit dit "de cure" qui est généralement une résine solubilisée dans un solvant aliphatique, formant un film qui limite le dessèchement du béton avant le "délavage".

Ces compositions présentent donc l'inconvénient de renfermer des solvants volatils indésirables d'après les directives récentes sur les émissions de C.O.V. (composés organiques volatils) dans l'environnement.

Parmi les retardateurs, on peut citer les gluconates, ou encore les résines aminoplastes cycliques décrites dans le brevet FR-A-2 722 777, ou encore le retardateur de prise décrit dans le brevet DD-A-230 861 renfermant 2 % d'acide carboxylique, en présence d'eau et 15 % en poids de "Zelleim", appliqué au pinceau ou à la brosse, à la surface du béton.

Plus récemment, ont été mises au point des compositions aqueuses à base de latex de type styrène butadiène, jouant le rôle d'agent de "cure", renfermant une résine aminoplaste cyclique en tant que retardateur et éventuellement un agent modificateur de rhéologie, à savoir un épaississant : éther de cellulose ou composé de type HASE (émulsion, soluble dans les alcalis, d'un polymère à modification hydrophobe) pour éviter les coulures sur les sols en pente.

Cet épaississant est en faible concentration (< 0,5 % en poids) pour que la composition soit suffisamment fluide pour être pulvérisée.

De telles compositions, (voir Tableau I) mises sur le marché, sont déclinées en gammes de puissances (c'est-à-dire de concentration en retardateur) adaptées aux tailles usuelles de granulats et aux conditions climatiques du chantier car la température affecte la prise du ciment et la vitesse de diffusion du principe actif.

**Tableau I -**

| Formule de désactivant selon l'art antérieur (les proportions sont exprimées en pourcentages massiques d'extrait sec). La gamme de puissance est fonction de la proportion en agent retardateur. | |
|---|---|
| Latex type styrène-butadiène | 7,5 |
| Retardateur Résine aminoplaste cyclique | 1 à 20 |
| (Epaississant HASE) | (0,45) |
| Agent antimousse | 0,1 |
| Eau | Qsq 100 |

Cependant il reste toujours une part d'impondérables quant au climat, notamment pendant le temps d'attente avant nettoyage, c'est-à-dire une fois la puissance choisie et appliquée. La conséquence est que la puissance prévue n'est souvent pas la bonne. Si la température du chantier ou de l'atelier est plus élevée que prévue, la prise est trop rapide et il devient impossible de laver la peau du béton qui est trop dure. Si la température est plus basse que prévue, la prise est trop lente et le corps du béton ne durcit pas suffisamment rapidement pour autoriser le lavage de 1a peau dans des délais raisonnables sans être lui-même endommagé.

Un premier but de l'invention est donc de pallier les inconvénients liés aux impondérables climatiques en proposant une composition désactivante qui permet de choisir la puissance de désactivation indépendamment de la température extérieure lors de la fabrication du béton et indépendamment de la durée d'action de ladite composition avant le nettoyage ("délavage").

La composition désactivante selon l'invention doit pouvoir être appliquée par les méthodes classiques telles que la pulvérisation. La composition doit en outre présenter une viscosité élevée pour éviter d'éventuelles coulures ou accumulations dans les points bas, tout en favorisant la répartition régulière et homogène sur la surface du béton à traiter. Or la pulvérisation de compositions renfermant des agents modificateurs de rhéologie (épaississants) n'est pas aisée.

Un second but de l'invention est donc de proposer une composition homogène présentant des caractéristiques rhéologiques permettant d'une part sa pulvérisation et d'autre part son application sans coulures ni accumulations.

Ces buts sont atteints par la composition selon l'invention, à savoir une composition désactivante de surface pour béton ou mortier comportant un retardateur, de l'eau et un agent modificateur de rhéologie de type HASE (émulsion, soluble dans les alcalis, d'un polymère à modification hydrophobe), caractérisée en ce que le retardateur est un acide carboxylique et en ce que la concentration en HASE est supérieure ou égale à 0,5 % en poids. Avantageusement la concentration en HASE est comprise entre 1 et 10 % en poids, et de préférence comprise entre 5 et 6 % en poids.

La combinaison d'un HASE, en particulier à un tel niveau de concentration, avec un acide carboxylique sous la forme acide, et non de son sel, permet de manière surprenante d'obtenir une composition désactivante, à faible viscosité, facile à pulvériser, dont la rhéologie ne se modifie (en s'épaississant) qu'au contact de la surface du béton (passant d'une viscosité de 5.000 à 10.000 mPa.s par exemple). Il n'y a alors pas de problèmes de coulures ni d'accumulation dans les points bas. La composition désactivante selon l'invention peut même être utilisée sur des parois verticales.

En effet, des mélanges de gluconate de sodium ou de résines aminoplastes cycliques avec quelques pour cents de HASE sont trop visqueux pour être pulvérisés.

Le modificateur de rhéologie de type HASE peut être constitué soit par des homopolymères obtenus à partir de l'acide acrylique, l'acide méthacrylique ou l'acrylamide, soit des copolymères obtenus à partir des mêmes monomères avec, en plus des esters acryliques en proportions diverses.

De préférence l'acide carboxylique a pour formule générale (I) : 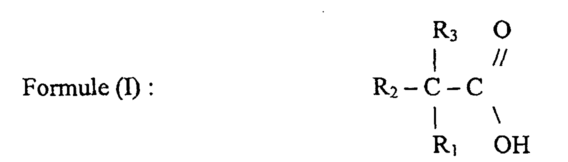
R₁ étant H ou -CH₂-COOH
R₂ étant H ou OH
R₃ étant H, CH₃, -(CHOH)n -CH₂OH, ou -(CHOH)n -COOH
et n étant un entier de 1 à 3.

Le retardateur peut notamment être choisi parmi l'acide acétique, l'acide tartrique, l'acide citrique, l'acide gluconique ou l'acide lactique.

Il a été découvert que de manière avantageuse, l'acide carboxylique est un acide α alcool, c'est-à-dire que le carbone portant la fonction acide carboxylique porte également un groupement hydroxy (cas où R₂ = OH dans la formule (I) ci-dessus). De préférence, la concentration en acide carboxylique est supérieure à 0,5 % en poids.

Le caractère surprenant de l'invention réside dans le fait que lorsque l'on utilise une combinaison d'un acide carboxylique (la plupart du temps généralement déjà connu comme retardateur) et d'un agent modificateur de rhéologie du type HASE, en particulier à une concentration supérieure ou égale à 0,5 %, dans une formule pour désactivant de surface, le retard de prise de la peau du béton est pratiquement insensible à la température (notamment entre 5 et 40° C environ) et insensible à l'échéance de lavage du béton après pulvérisation du désactivant. Ceci confère à la composition selon l'invention une très grande facilité et souplesse d'utilisation, notamment sur les chantiers extérieurs, et en particulier en été.

La composition selon l'invention étant une solution aqueuse, elle présente de plus l'avantage de ne pas contenir de solvants d'origine pétrolière. Elle ne peut être impliquée dans l'émission de C.O.V. (Composés Organiques Volatils) dans l'atmosphère selon la directive 1999/12/CE du Conseil relative à la réduction des émissions de composés organiques volatils dues à l'utilisation de solvants organiques dans certaines activités et installations.

La présente invention porte également sur le procédé de modification de la surface d'un béton ou d'un mortier durant sa prise, consistant à appliquer une composition désactivante selon l'invention dans des proportions de 0,25 ± 0,05 litre par mètre carré de ladite surface, puis à laver à l'eau cette surface après une période déterminée.

La composition selon l'invention peut être utilisée pour la désactivation de béton ou mortier réalisés avec tout type de ciment, en particulier des ciments de type CEM I ou CEM II.

Cette utilisation est tout à fait appréciée à des températures comprises entre 5 et 40° C.

La présente invention va être mieux explicitée à l'aide des exemples illustratifs ci-après, et des figures annexées, dans lesquelles :
- la figure 1 montre la profondeur de désactivation d'une composition selon l'invention contenant de l'acide citrique comme retardateur, en fonction de la concentration en acide citrique et à différentes températures du béton.
- la figure 2 présente une comparaison entre une composition selon l'invention et une composition selon l'Art Antérieur, à différentes températures pour un temps de lavage de 20 heures.
- la figure 3 montre l'action de la composition selon l'invention sur deux types de ciment Portland.
- et la figure 4 présente des comparaisons entre divers acides carboxyliques dans des compositions selon l'invention.

### EXEMPLES

Diverses planches de béton présentant la formulation suivante (en kg/m³) ont été soumises à différents tests de désactivation :

| | |
|---|---|
| Ciment CPJ CEM II A 42,5 | 330 |
| Sable 0/4 mm | 394 |
| Gravillon 4/8 mm | 94 |
| Gravillon 8/16 mm | 1.299 |
| Eau totale | 162 |

Les constituants sont introduits dans un malaxeur de 90 litres. Après une étape de pré-homogénéisation, l'eau est introduite. Le malaxage est prolongé encore 2 minutes puis le béton est coulé dans les moules de 30 cm x 30 cm x 5 cm.

Une fois le béton vibré, à l'aide d'une aiguille vibrante, il est taloché de façon à obtenir une surface parfaitement lisse. Le désactivant est appliqué à l'aide d'un pulvérisateur à air comprimé. La quantité appliquée est de 0,22 litres par mètre carré. Après une période déterminée, les planches sont nettoyées à l'eau sous pression (∼ 90 bars).

### Méthode de mesure utilisée

Afin d'évaluer l'efficacité du retard de prise en surface du béton, un test de géométrie de surface de revêtement routier a été utilisé : la méthode de la mesure de la hauteur au sable. C'est une mesure de macrotexture. La texture est mesurée conformément à la norme NF P98-216-1. Il s'agit d'une mesure de hauteur moyenne de la texture d'une surface par remplissage des creux à l'aide d'un volume donné de sable spécifié.

### Exemple 1

La composition désactivante selon l'invention comprend (proportions exprimées en pourcentages en poids d'extrait sec) :

| | |
|---|---|
| Latex | 9,4 |
| Retardateur (acide carboxylique) | 1 à 20 |
| Agent modificateur de rhéologie (HASE) | 6 |
| Agent anti-mousse (polydiméthylsiloxane) | 0,05 |
| Eau | QSP 100 |

Le latex utilisé ici est une dispersion aqueuse de copolymère styrène butadiène anionique carboxylé.

Le latex opère en tant que produit de cure du béton frais (utile pour éviter une trop forte dessication du béton lors de grosses chaleurs) et permet également d'opacifier la composition aqueuse afin de mieux la colorer (l'opérateur vérifiant ainsi où il a appliqué la solution).

Dans cet exemple, des proportions pondérales variables en acide citrique ont été testées (1, 5, 10 et 15 %) à différentes températures.

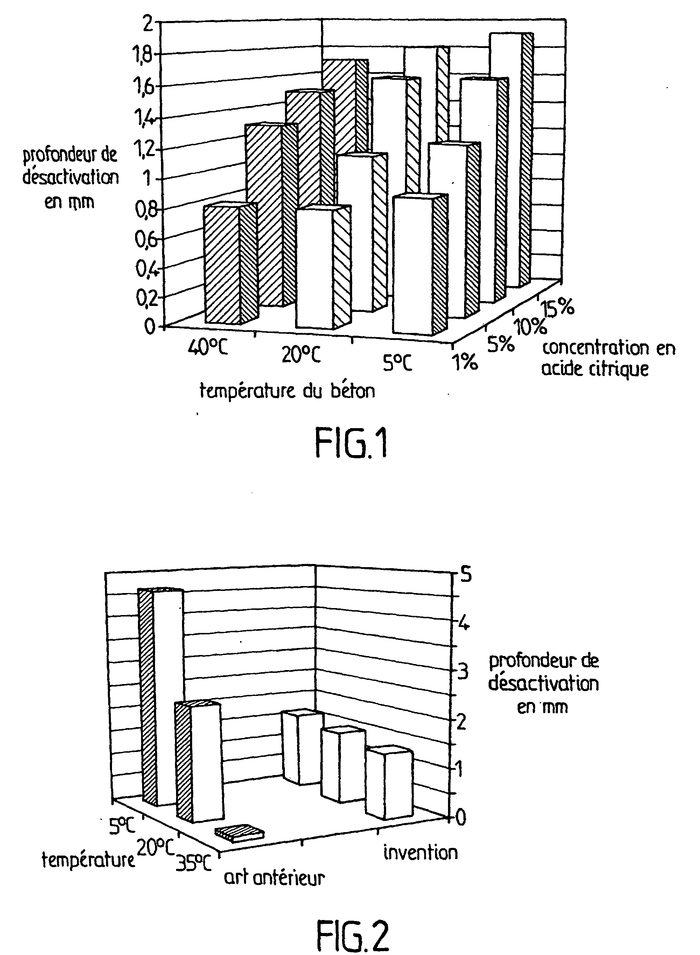

Les profondeurs de désactivation en fonction de la concentration en acide citrique et de la température du béton pour une échéance de lavage à 20 heures sont présentées dans le Tableau II, et visualisées sur la figure 1.

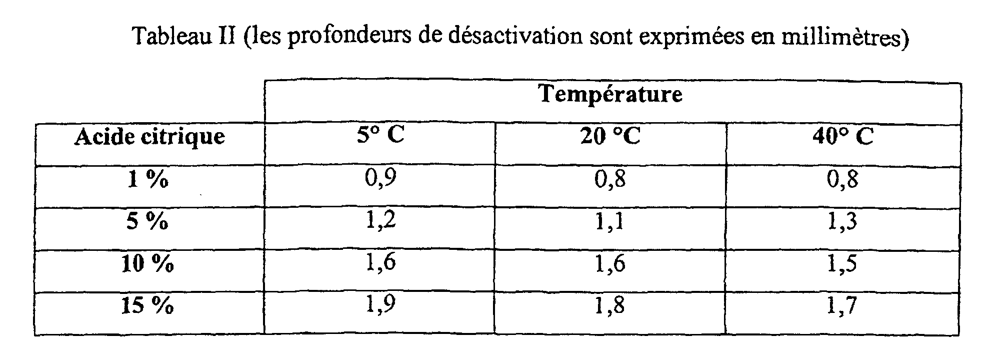

On remarque que la profondeur de désactivation est proportionnelle à la quantité d'acide carboxylique (retardateur) ajoutée, mais pratiquement indépendante de la température.

### Exemple 2

Cet exemple porte sur la comparaison contre une composition selon l'invention, renfermant 6 % de HASE et une concentration en acide citrique égale à 5 % en poids et une composition selon l'Art Antérieur renfermant 5 % de retardateur de type résine aminoplaste cyclique et moins de 0,5 % en poids de HASE. Différentes températures du béton (5 à 35° C), ont été testées ainsi que différentes échéances de lavage
(16 à 24 heures). Les résultats sont présentés dans le Tableau III suivant.

**Tableau III**

| (profondeurs de désactivation en mm) | | | | | | | |
|---|---|---|---|---|---|---|---|
| Retardateur 5 % | Art Antérieur [HASE] < 0,5 % | | | | Invention [HASE] = 6 % | | |
| **Echéance** *Température* | **16 H** | **20 H** | **24 H** | | **16 H** | **20 H** | **24 H** |
| *5° C* | 4,71 | 4,35 | 3,96 | | 1,40 | 1,33 | 1,26 |
| *20° C* | 2,46 | 2,06 | 1,68 | | 1,26 | 1,19 | 1,12 |
| *35° C* | 0,20 | 0 | 0 | | 1,11 | 1,05 | 0,98 |
| *Ecart (5° - 35°)* | 4,5 | 4,35 | 3,96 | | 0,29 | 0,28 | 0,28 |
| % de variation | 98 | 100 | 100 | | 20 | 24 | 24 |

On constate que l'incidence d'une variation de température (de 5 à 35° C) sur la profondeur de désactivation est environ 4 fois moindre pour la combinaison de l'invention. La profondeur de désactivation ne varie pas entre les échéances de lavage 16 et 24 heures de façon significative.

### Exemple 3 :

Dans cet exemple sont comparées des compositions selon l'Art Antérieur et selon l'invention identiques à celles de l'exemple 2, mais avec 10 % de retardateur (respectivement 10 % de résine aminoplaste cyclique et 10 % d'acide citrique).

**Tableau IV**

| (profondeurs de désactivation en mm) | | | | | | | |
|---|---|---|---|---|---|---|---|
| Retardateur 10 % | Art Antérieur [HASE] < 0,5 % | | | | Invention [HASE] = 6 % | | |
| **Echéance** *Température* | **16 H** | **20 H** | **24 H** | | **16 H** | **20 H** | **24 H** |
| *5° C* | 4,98 | 4,61 | 4,22 | | 1,70 | 1,62 | 1,57 |
| *20° C* | 2,73 | 2,33 | 1,95 | | 1,55 | 1,48 | 1,41 |
| *35° C* | 0,47 | 0,08 | 0 | | 1,41 | 1,34 | 1,28 |
| *Ecart (5° - 35°)* | 4,51 | 4,53 | 4,22 | | 0,29 | 0,28 | 0,29 |
| % de variation | 90 | 98 | 100 | | 17 | 17 | 18 |

On constate que l'incidence d'une variation de température (de 5 à 35° C) sur la profondeur de désactivation est environ 5 fois moindre pour la combinaison de l'invention. La variation d'échéance (de 16 à 24 heures) n'a pas d'incidence sur la profondeur de désactivation pour la combinaison de l'invention. Ce n'est pas le cas pour la combinaison de l'Art Antérieur.

La figure 2 permet de visualiser les résultats comparatifs obtenus pour les deux compositions ci-dessus en fonction de la température à une échéance de lavage de 20 heures.

### Exemple 4 :

Dans cet exemple sont comparées des compositions selon l'Art Antérieur et selon l'invention identiques à celles des exemples 2 et 3, mais avec 18 % de retardateur (respectivement 18 % de résine aminoplaste cyclique et 18 % d'acide citrique).

**Tableau V**

| (profondeurs de désactivation en mm) | | | | | | | |
|---|---|---|---|---|---|---|---|
| Retardateur 18 % | Art Antérieur [HASE] < 0,5 % | | | | Invention [HASE] = 6 % | | |
| **Echéance** *Température* | **16 H** | **20 H** | **24 H** | | **16 H** | **20 H** | **24 H** |
| *5° C* | 5,39 | 5,01 | 4,56 | | 2,18 | 2,10 | 2,02 |
| *20° C* | 3,14 | 2,76 | 2,37 | | 2,03 | 1,98 | 1,90 |
| *35° C* | 1,06 | 0,5 | 0,11 | | 1,90 | 1,83 | 1,77 |
| *Ecart(5° - 35°)* | 4,33 | 4,51 | 5,45 | | 0,28 | 0,27 | 0,25 |
| % de variation | 80 | 90 | 98 | | 13 | 13 | 12 |

Pour la combinaison de l'invention, l'effet de la température sur la profondeur de désactivation demeure beaucoup plus faible que pour la combinaison de l'Art Antérieur (environ 6 fois moindre). Quant à l'incidence de la variation d'échéance de lavage,
celle-ci se manifeste pour la combinaison de l'Art Antérieur et non pour la combinaison de l'invention.

### Exemple 5

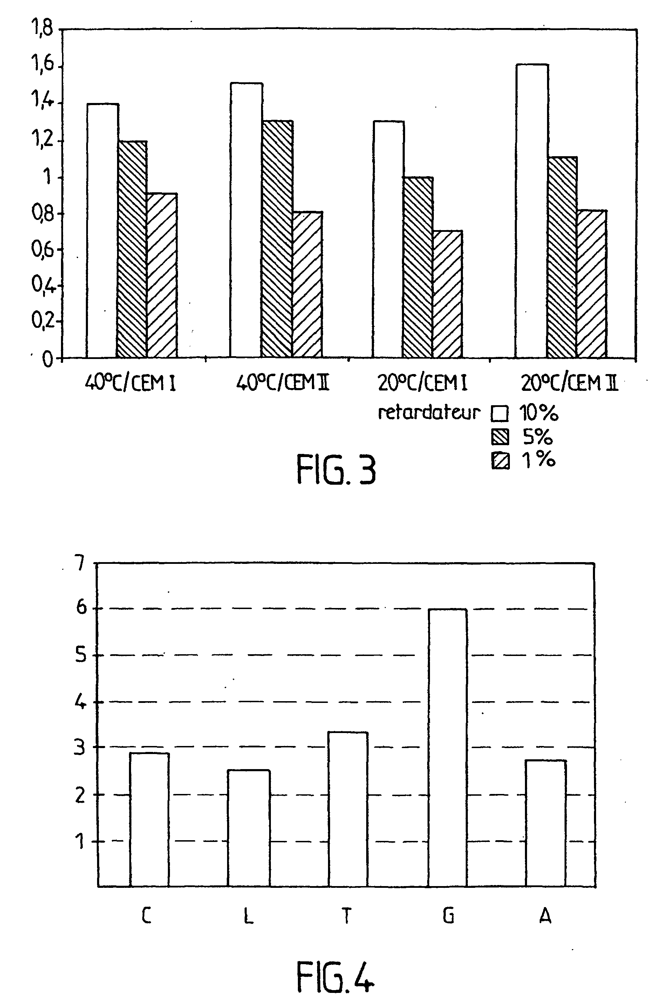

La profondeur de désactivation a été mesurée en faisant varier la nature du ciment CEM I (Ciment Portland contenant au moins 95 % de clinker) et CEM II (Ciment Portland contenant au moins 65 % de clinker), toutes choses étant égales par ailleurs, avec une composition selon l'invention. Trois concentrations en retardateur ont été testées, à 20° C et à 40° C. Les résultats sont présentés sur la figure 3.

On constate que la puissance de désactivation est peu sensible à la nature du ciment, et que les meilleurs résultats (stabilité) sont obtenus à des concentrations en retardateurs faibles (1 %).

### Exemple 6

Des comparaisons ont été effectuées entre les différents acides carboxyliques à savoir, acide citrique (C), lactique (L), tartrique (T), gluconique (G) et acétique (A) dans les conditions suivantes :

Sur des moules de 15 x 15 x 2 cm environ contenant approximativement 1 kg de mortier réalisé avec des granulats de 0-4 mm, a été pulvérisée une solution aqueuse selon l'invention à 0,22 litre au m².

Le lavage a été effectué le lendemain (échéance 16 heures).

Le mortier a été pesé avant et après le lavage, les pourcentages en poids de mortier ainsi éliminés par la désactivation sont présentés à la figure 4.

Tous les acides ont une efficacité équivalente à celle de l'acide citrique. L'acide gluconique présente une efficacité nettement supérieure.

## Revendications

1. Composition désactivante de surface pour béton ou mortier comportant un retardateur, de l'eau et un agent modificateur de rhéologie de type émulsion, soluble dans les alcalis, d'un polymère à modification hydrophobe (HASE), **caractérisée en ce que** le retardateur est un acide carboxylique et **en ce que** la concentration en émulsion, soluble dans les alcalis, d'un polymère à modification hydrophobe (HASE) est supérieure ou égale à 0,5 % en poids.

2. Composition selon la revendication 1, **caractérisée en ce que** la concentration en émulsion, soluble dans les alcalis, d'un polymère à modification hydrophobe (HASE) est comprise entre 1 et 10 % en poids.

3. Composition selon l'une des revendications 1 ou 2, **caractérisée en ce que** la concentration en émulsion, soluble dans les alcalis, d'un polymère à modification hydrophobe (HASE) est comprise entre 5 et 6 % en poids.

4. Composition selon l'une des revendications 1 à 3, **caractérisée en ce que** l'acide carboxylique a pour formule générale (I) 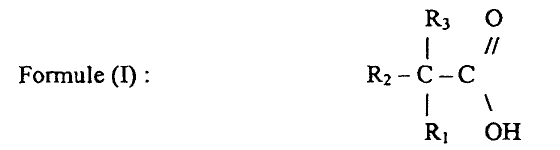 R₁ étant H ou -CH₂-COOH
R₂ étant H ou OH
R₃ étant H, CH₃, -(CHOH)n -CH₂OH ou (CHOH)n -COOH
et n étant un entier de 1 à 3.

5. Composition selon l'une des revendications 1 à 4, **caractérisée en ce que** le retardateur est choisi parmi : l'acide acétique, l'acide tartrique, l'acide citrique, l'acide gluconique, l'acide lactique.

6. Composition selon la revendication 4, **caractérisée en ce que** l'acide carboxylique est un acide α alcool.

7. Composition selon l'une des revendications 1 à 6, **caractérisée en ce que** la concentration en acide carboxylique est supérieure à 0,5 % en poids.

8. Procédé de modification de la surface d'un béton ou d'un mortier durant sa prise consistant à appliquer une composition désactivante selon l'une des revendications précédentes dans des proportions de 0,25 ± 0,05 litre par mètre carré de ladite surface, puis à laver à l'eau cette surface après une période déterminée.

9. Utilisation de la composition selon l'une des revendications 1 à 7 ou du procédé selon la revendication 8 pour la désactivation de béton ou mortier réalisés avec des ciments de type CEM I ou CEM II.

10. Utilisation de la composition selon l'une des revendications 1 à 7 ou du procédé selon la revendication 8 à des températures comprises entre 5 et 40° C.

## Claims

1. A surface-deactivating composition for concrete or mortar comprising a retarder, water and a rheology-modifying agent of the alkali-soluble emulsion of a hydrophobically modified polymer (HASE) type, **characterised in that** the retarder is a carboxylic acid and that the concentration of alkali-soluble emulsion of hydrophobically modified polymer (HASE) is equal to or greater than 0.5% by weight.

2. A composition according to Claim 1, **characterised in that** the concentration of alkali-soluble emulsion of hydrophobically modified polymer (HASE) is between 1 and 10% by weight.

3. A composition according to one of Claims 1 or 2, **characterised in that** the concentration of alkali-soluble emulsion of hydrophobically modified polymer (HASE) is between 5 and 6% by weight.

4. A composition according to one of Claims 1 to 3, **characterised in that** the carboxylic acid has as its general formula (I) 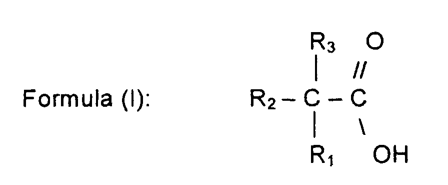 R₁ being H or -CH₂-COOH,
R₂ being H or OH,
R₃ being H, CH₃, -(CHOH)n-CH₂OH or (CHOH)n-COOH,
and n being an integer from 1 to 3.

5. A composition according to one of Claims 1 to 4, **characterised in that** the retarder is selected from among: acetic acid, tartaric acid, citric acid, gluconic acid and lactic acid.

6. A composition according to Claim 4, **characterised in that** the carboxylic acid is an α-hydroxyacid.

7. A composition according to one of Claims 1 to 6, **characterised in that** the concentration of carboxylic acid is greater than 0.5% by weight.

8. A process for modifying the surface of a concrete or mortar during its setting, consisting of applying a deactivating composition according to one of the preceding claims in proportions of 0.25 ± 0.05 liter per square meter of said surface, then washing this surface with water after a given period.

9. The use of the composition according to one of Claims 1 to 7, or the process according to Claim 8 for the deactivation of concrete or mortar produced with cements of type CEM I or CEM II.

10. The use of the composition according to one of Claims 1 to 7 or the process according to Claim 8 at temperatures of between 5 and 40°C.

## Patentansprüche

1. Oberflächen-deaktivierende Zusammensetzung für Beton oder Mörtel, mit einem Verzögerer, Wasser und einem die Rheologie modifizierenden Mittel vom Typ einer alkalilöslichen Emulsion eines Polymers mit hydrophober Modifikation (HASE), **dadurch gekennzeichnet, daß** der Verzögerer eine Carbonsäure ist und daß die Konzentration der alkalilöslichen Emulsion eines Polymers mit hydrophober Modifikation (HASE) größer oder gleich 0,5 Gew.-% ist.

2. Zusammensetzung nach Anspruch 1, **dadurch gekennzeichnet, daß** die Konzentration der alkalilöslichen Emulsion eines Polymers mit hydrophober Modifikation (HASE) im Bereich von 1 bis 10 Gew.-% liegt.

3. Zusammensetzung nach Anspruch 1 oder 2, **dadurch gekennzeichnet, daß** die Konzentration der alkalilöslichen Emulsion eines Polymers mit hydrophober Modifikation (HASE) im Bereich von 5 bis 6 Gew.-% liegt.

4. Zusammensetzung nach einem der Ansprüche 1 bis 3, **dadurch gekennzeichnet, daß** die Carbonsäure die allgemeine Formel (I) 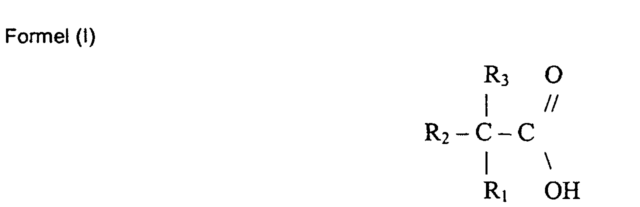 aufweist, worin
R₁ für H oder -CH₂-COOH,
R₂ für H oder OH,
R₃ für H, CH₃, -(CHOH)ₙ-CH₂OH oder (CHOH)ₙ-COOH
und n für eine ganze Zahl von 1 bis 3 steht.

5. Zusammensetzung nach einem der Ansprüche 1 bis 4, **dadurch gekennzeichnet, daß** der Verzögerer ausgewählt ist unter Essigsäure, Weinsäure, Citronensäure, Gluconsäure und Milchsäure.

6. Zusammensetzung nach Anspruch 4, **dadurch gekennzeichnet, daß** die Carbonsäure eine α-Alkoholsäure ist.

7. Zusammensetzung nach einem der Ansprüche 1 bis 6, **dadurch gekennzeichnet, daß** die Konzentration an Carbonsäure größer als 0,5 Gew.-% ist.

8. Verfahren zur Oberflächenmodifikation von Beton oder Mörtel während seines Abbindens, das darin besteht, eine deaktivierende Zusammensetzung nach einem der vorhergehenden Ansprüche in Anteilen von 0,25 ± 0,05 Liter pro Quadratmeter der Oberfläche aufzubringen und diese Oberfläche dann nach einer vorbestimmten Zeitdauer mit Wasser abzuwaschen.

9. Verwendung der Zusammensetzung nach einem der Ansprüche 1 bis 7 oder des Verfahrens nach Anspruch 8 zur Deaktivierung von Beton oder Mörtel, der mit Zementen des Typs CEM I oder CEM II hergestellt wird.

10. Verwendung der Zusammensetzung nach einem der Ansprüche 1 bis 7 oder des Verfahrens nach Anspruch 8 bei Temperaturen im Bereich von 5 bis 40°C.
